Europäisches Patentamt

**European Patent Office**

**Office européen des brevets**

(11) Numéro de publication : **0 174 880**
**B1**

(12) **FASCICULE DE BREVET EUROPÉEN**

(45) Date de publication du fascicule du brevet :
**20.09.89**

(21) Numéro de dépôt : **85401450.3**

(22) Date de dépôt : **15.07.85**

(51) Int. Cl.⁴ : **H 04 L 7/02**

(54) **Dispositif de localisation des transitions d'un signal de données par rapport à un signal d'horloge et mécanisme de cadrage comprenant un tel dispositif.**

(30) Priorité : **13.07.84 FR 8411190**

(43) Date de publication de la demande :
**19.03.86 Bulletin 86/12**

(45) Mention de la délivrance du brevet :
**20.09.89 Bulletin 89/38**

(84) Etats contractants désignés :
**DE GB IT**

(56) Documents cités :
**EP—A— 0 023 852**
**EP—A— 0 102 598**
**WO—A—81 /012 26**
**US—A— 3 908 084**
**US—A— 4 400 817**
**IBM TECHNICAL DISCLOSURE BULLETIN, vol. 18, no. 10, mars 1976, pages 3334-3337, New York, US; W.C. LEUNG: "Digital phase-locked loop circuit"**

(73) Titulaire : **Servel, Michel**
**Le Rhu en Servel**
**F-22300 Lannion (FR)**

**Thomas, Alain**
**Ar Santé L 322**
**F-22300 Lannion (FR)**

(72) Inventeur : **Servel, Michel**
**Le Rhu en Servel**
**F-22300 Lannion (FR)**
Inventeur : **Thomas, Alain**
**Ar Santé L 322**
**F-22300 Lannion (FR)**

(74) Mandataire : **Fort, Jacques et al**
**CABINET PLASSERAUD 84, rue d'Amsterdam**
**F-75009 Paris (FR)**

## Description

L'invention a pour objet un dispositif de localisation des transitions d'un signal de données transmises sous forme numérique par rapport aux fronts successifs d'un signal d'horloge locale synchrone ou plésiochrone du signal de données. Elle est notamment utilisable dans un mécanisme permettant de cadrer le signal d'horloge locale par rapport à un signal de données présentant initialement une relation de phase aléatoire avec le signal d'horloge, afin de permettre la saisie des données par échantillonnage dans une plage centrée dans l'intervalle de temps de présence des données et de durée très inférieure à celle de cet intervalle.

On connaît déjà de nombreux dispositifs destinés à remplir cette fonction. Ils utilisent en général des moyens pour fournir plusieurs signaux présentant des retards prédéterminés à partir d'un des signaux d'entrée (signal de données et signal d'horloge) et des moyens pour comparer les instants d'apparition des transitions sur les différents signaux. En particulier, le document EP-A-21 942 décrit un dispositif de cadrage pour système de transmission de données sous forme de séquences de longueur limitée, comportant chacune un en-tête identifiable. Le cadrage s'effectue sur une horloge locale plésiochrone. Du fait de la longueur limitée des séquences, on évite une dérive trop importante par rapport au cadrage, qui est effectué une fois pour toutes en début de chaque séquence.

On connaît également (US-A-3 908 084) un dispositif de localisation des transitions d'un signal de données conforme au préambule de la revendication 1.

Ce dispositif comporte des moyens logiques pour sélectionner directement une phase appropriée du signal de données, mais sans engendrer un signal de commande d'une boucle d'asservissement.

L'invention vise notamment à fournir un dispositif mettant en œuvre la détection des transitions de la partie courante du signal de données, dispositif adaptable à tout signal numérique. Dans ce but, l'invention propose notamment un dispositif de localisation des transitions qui comporte également des moyens logiques reliés à la sortie des bascules qui reçoivent le signal de données avec des décalages temporels différents et conçus pour engendrer, en fonction d'un critère prédéterminé, un signal représentatif de la relation de phase entre le signal d'horloge et le signal de données.

Les décalages temporels peuvent être réalisés en prélevant le signal de données à plusieurs emplacements successifs de moyens de retard ; mais on peut arriver à un résultat équivalent, bien que de façon un peu plus complexe, en réalisant le décalage temporel par action non plus sur le signal de données, mais sur le signal d'horloge.

Le mécanisme ainsi proposé permet de contrôler l'instant d'échantillonnage du signal de données par l'horloge et de tenir cet instant, par un asservissement judicieux, aussi éloigné que possible de la transition de données. On s'affranchit ainsi de toute incertitude d'échantillonnage, l'information valide étant obtenue en sortie de la bascule médiane 12. Dans un premier mode d'utilisation de l'invention, on supposera que les signaux de données et d'échantillonnage sont synchrones entre eux, l'asservissement devant permettre, par action sur une ligne à retard variable, d'obtenir un cadrage correct entre ces signaux. Dans un second mode d'utilisation, les signaux de données et d'horloge seront plésiochrones entre eux ; l'asservissement agit alors, par commande sur la fréquence de l'oscillateur d'horloge, de telle sorte qu'il y ait identité entre le rythme global de l'horloge et le rythme des données. On décrira successivement les deux approches.

L'invention sera mieux comprise à la lecture de la description qui suit de modes particuliers d'exécution donnés à titre d'exemples non limitatifs. La description se réfère aux dessins qui l'accompagnent, dans lesquels :

la Figure 1 est un schéma de principe d'un dispositif de localisation de transitions avec action sur le signal d'horloge d'échantillonnage des données,

la Figure 2 est un diagramme temporel montrant le signal de données $D_0$, les plages, de largeur 2v, d'échantillonnage valide, le signal d'horloge Ho et le signal d'horloge Hv recadré,

la Figure 3, similaire à la Figure 2, montre le signal de données $D_0$, et trois signaux d'horloge Ho—, Ho et Ho+ présentant des décalages successifs,

la Figure 4 montre le signal de données initial, deux signaux de données décalés $D_1$, $D_2$ ainsi que le signal d'échantillonnage H,

la Figure 5 est un schéma de principe d'un dispositif de localisation de transitions appliqué à un système d'alignement de phase,

la Figure 6 est un chronogramme faisant apparaître les différentes types de cadrages de l'horloge et des données,

la Figure 7, similaire à la Figure 5, montre un mode particulier de réalisation de cette dernière,

la Figure 8 est un schéma de détail montrant une simplification possible du mécanisme de la Figure 7,

la Figure 9, similaire à la Figure 5, montre un mode de réalisation utilisable avec une horloge locale plésiochrone du rythme des données,

la Figure 10 est le chronogramme des phases relatives des données et horloges dans un second mode de réalisation du système, et

la Figure 11 représente un schéma de la logique associée à ce second mode de réalisation.

Avant de décrire divers modes de réalisation du dispositif suivant l'invention, il convient de rappeler les conditions à remplir pour effectuer la saisie de données numériques par échantillonnage à des instants fixés par les fronts d'un signal d'horloge synchrone ou plésiosynchrone du signal de données, lorsque la relation de phase entre les signaux n'est pas déterminée a priori.

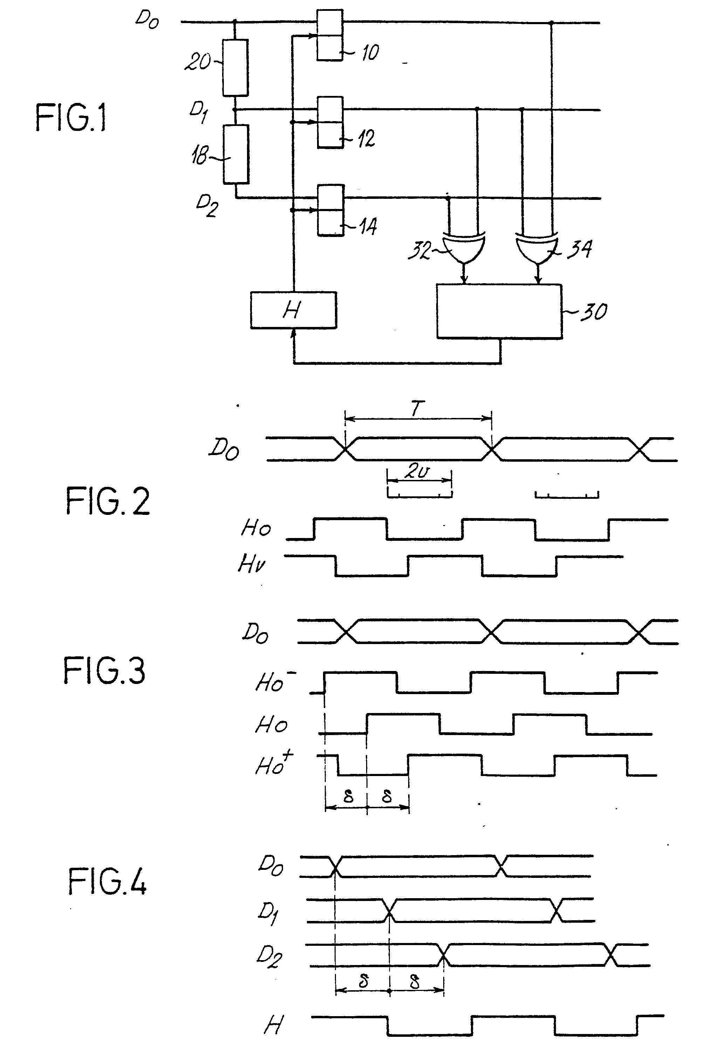

Pour assurer la fiabilité de saisie requise sur un signal de données $D_0$ de période T, l'échantillonnage doit s'effectuer sur des plages de validité 2v centrées par rapport aux intervalles de temps de présence des données (Figure 2). Le signal d'horloge Ho ayant une phase quelconque par rapport au signal de données Do, on doit amener et maintenir les fronts d'horloge dans les plages de largeur 2v par déphasage d'un des signaux, par exemple par déphasage du signal d'horloge pour l'amener en Hv.

Le principe mis en œuvre par l'invention implique de créer, à partir du signal d'horloge Ho, au moins deux signaux Ho+ et Ho— décalés respectivement de +δ et —δ avec δ ⩽ T (Figure 3). Dans la pratique, il revient au même de créer, à partir du signal de données, deux autres signaux $D_1$ et $D_2$ décalés respectivement de + δ et + 2δ (Figure 4).

La constitution de principe du dispositif de localisation sera celle montrée en Figure 1 : le dispositif comprend au moins trois bascules (10, 12, 14). Chaque bascule reçoit le signal d'horloge H sur une entrée de validation et reçoit le signal de données avec un décalage temporel par rapport à l'horloge, déterminé par des moyens de retard 18 et 20, différent pour chaque bascule. Sur la Figure 1, le signal reçu $D_0$ donne ainsi naissance aux signaux $D_1$ et $D_2$. Des moyens logiques, comportant sur la Figure 1 une logique combinatoire 30 et des portes OU EXCLUSIF 32, 34, commandent l'horloge.

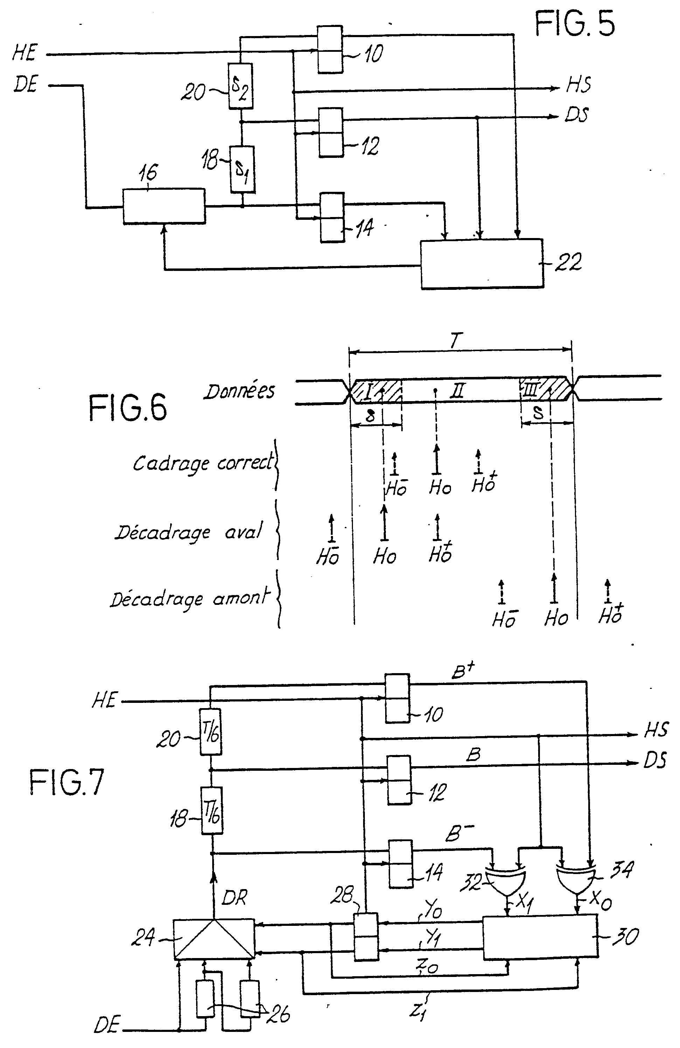

Le mécanisme d'asservissement en phase peut être mis en œuvre chaque fois que l'on dispose d'un signal de données accompagné d'un signal d'horloge synchrone de ce dernier mais ne présentant pas avec celui-ci une relation de phase connue. Ces deux signaux peuvent d'ailleurs être affectés, l'un par rapport à l'autre, d'une gigue temporelle dont il faut tenir compte dans la réalisation du système. Le principe général est donné sur la Figure 5.

L'approche consiste à adopter une valeur commune δ (ou des valeurs $δ_1$ et $δ_2$) inférieure à T/2 et à décaler le signal d'horloge et le signal de données l'un par rapport à l'autre de façon que les trois échantillonnages Ho, Ho— et Ho+ saisissent une valeur identique en fonctionnement stationnaire. Le respect de cette condition garantit que les fronts de Ho ne sont pas à proximité d'une transition de données. En cas de non respect de cette condition, le décalage du signal d'horloge doit se faire vers l'aval si l'échantillon prélevé sur les transitions Ho— est différent des autres, comme indiqué à la seconde ligne de la Figure 3, et inversement.

Le choix de la valeur de δ agit sur la tolérance du système à la gigue de phase. En effet, la technique proposée revient à partitionner la période du signal de données en trois zones I, II, III dont l'effet de l'échantillonnage par HO sera différent pour chacune d'elles (Figure 6). On constate en premier lieu que l'amplitude crête-crête de la gigue de phase devra être inférieure à 2δ, faute de quoi risquent de se produire des passages non détectables de part et d'autre d'une transition de données. De plus, il ne doit pas y avoir passage direct d'un front d'horloge entre l'amont et l'aval de la plage de validité, faute de quoi peuvent se produire un effet de ping-pong de l'asservissement et des répétitions d'erreurs. Cette seconde contrainte se traduit par :

$$\omega_{cc} = T - 2δ - k \qquad\qquad (1)$$

où k est l'amplitude du décalage effectué par la ligne 16 à la suite d'une détection de décentrage.

La gigue maximale admissible sera donc le minimum de deux valeurs :

$$\omega_{cc} = \inf (2δ, T - 2δ - k) \qquad\qquad (2)$$

Un optimum est obtenu pour $k = T - 4δ$ et autorise une amplitude de gigue de valeur maximale $\omega_{ccmax}$ :

$$\omega_{ccmax} = 2δ = (T - k)/2 \qquad\qquad (3)$$

Le dispositif de localisation appliquant cette approche peut utiliser soit plusieurs signaux de données découlant les uns des autres et dont les transitions sont décalées de δ, soit des signaux d'horloge découlant les uns des autres et décalés de δ (le signal non soumis à décalage restant unique et fixe). La première solution sera plus généralement plus commode à mettre en œuvre. Elle peut notamment être incorporée à un mécanisme de recadrage du genre montré en Figure 5.

Le mécanisme de la Figure 5 comporte deux entrées DE et HE sur lesquelles sont respectivement appliqués le signal de données et un signal d'horloge synchrone du signal de données. Le dispositif de localisation comporte trois bascules 10, 12 et 14. L'entrée de validation de chaque horloge est reliée à l'entrée HE de façon à recevoir directement le signal d'horloge locale. L'entrée HE est également reliée directement à la borne de sortie d'horloge HS.

Le signal de données arrivant sur la borne DE traverse une ligne à retard 16 programmable par bonds d'amplitude k. Le signal de sortie de la ligne à retard 16 est directement appliquée à la bascule 14. Il parvient à la bascule 12 par l'intermédiaire d'un élément de retard 18 fournissant un retard fixe $δ_1$, à la bascule 10 par l'intermédiaire de l'élément 18 et d'un élément 20 donnant un retard $δ_2$. En général, on

prendra $\delta 2 = \delta 1 = \delta$. Le signal de données en sortie DS sera constitué par la sortie de la bascule médiane 12.

Le mécanisme de la Figure 5 comporte encore des moyens 22 d'analyse des sorties des bascules 10, 12 et 14 et de commande de la ligne à retard variable 16. Ces moyens 22 sont prévus pour déterminer, par analyse et comparaison des sorties des bascules 10, 12 et 14, dans laquelle des zones I, II et III (Figure 6) se placent les fronts du signal d'horloge HE. De plus, les moyens 22 doivent commander la ligne à retard variable 16 pour :

laisser inchangé le retard pk si les fronts d'horloge se trouvent dans la zone II,

réduire le retard de pk à (p-1)k si les fronts d'horloge se placent dans la zone I, augmenter le retard de pk à (p+1)k dans le cas où les fronts d'horloge se placent dans la zone III.

Le nombre n de pas élémentaires fournis par la ligne à retard 16 doit être tel que l'on puisse toujours trouver un retard pk, avec $O \leqslant p \leqslant n$, tel que l'on puisse sortir d'une situation où les fronts d'horloge se trouvent dans la zone I ou III. Pour cela, il faut, dans le cas d'une amplitude crête à crête de gigue $\omega_{cc}$ que :

$$nk > \delta + \omega_{cc},$$

ce qui, dans la situation optimale envisagée plus haut en (3) se traduit par :

$$nk > 3\delta.$$

On décrira maintenant des exemples particuliers et chiffrés d'exécution du mécanisme dont le schéma a été donné en Figure 5.

La Figure 7 correspond aux choix suivants :

n = 2

k = T 4$\delta$ (valeur optimale)

$\delta$ = T/6, ce qui conduit à k = T/3.

La ligne à retard peut alors être constituée par un multiplexeur 24 à trois entrées associé à deux éléments 26 fournissant chacun un retard T/3. La commutation est commandée par un registre 2 bits 28 qui reçoit le signal d'horloge sur son entrée de validation et des signaux Y0 et Y1 provenant d'une logique combinatoire 30 sur ses entrées de données.

La logique combinatoire 30 reçoit elle-même les signaux de sortie Z0 et Z1 du registre 28 et des signaux logiques X0 et X1 fournis par des portes OU EXCLUSIF 32 et 34. Les deux entrées de chacune des portes 32 et 34 sont reliées à la sortie de deux bascules successives parmi les bascules 10, 12 et 14.

La logique combinatoire 30 permet une analyse en détectant les quatre combinaisons possibles de signaux X0 et X1, qui correspondent aux combinaisons d'états des bascules 10, 12 et 14 données par le tableau :

| Analyse | $\overline{X_0}\ \overline{X_1}$ | $\overline{X_0}\ X_1$ | $X_0\ X_1$ | $X_0\ \overline{X_1}$ |
|---|---|---|---|---|
| Etat bascules | $B^+ = B = B^-$ | $B^+ = B \neq B^-$ | impossible | $B^+ \neq B = B^-$ |
| Zone | II | III | - | I |

$B^+$, B et $B^-$ correspondent respectivement aux sorties des bascules 10, 12 et 14.

La table de vérité du multiplexeur 24 est :

| DR | $Z_0$ | $\overline{Z_0}$ |
|---|---|---|
| $Z_1$ | a | b |
| $\overline{Z_1}$ | c | |

où a, b et c désignent les entrées respectivement reliées à l'entrée de données DE, à l'entrée retardée de T/3, à l'entrée retardée de 2T/3.

L'algorithme de décision suivant lequel la logique combinatoire 30 doit commuter le multiplexeur 24 doit alors être :

| Analyse | $\overline{X}o\ \overline{X}1$ | $\overline{X}o\ X1$ | $Xo\ X1$ | $Xo\ \overline{X}1$ |
|---------|------|------|------|------|
| Action | stable | Augmenter retard | – | Diminuer retard |
| Etat initial   a | a | b | | c |
| b | b | c | | a |
| c | c | a | | b |

Cela conduit à réaliser, au niveau de la logique combinatoire 30, les fonctions suivantes :

$$y_0 = x_0 z_1 + x_1 \bar{z}_0 \bar{z}_1 + \bar{x}_0 \bar{x}_1 z_0$$

$$y_1 = x_1 z_0 + \bar{x}_0 \bar{x}_1 z_1 + x_0 \bar{z}_0 \bar{z}_1$$

L'ensemble de ces fonctions peut être réalisé sans difficulté par des réseaux de portes logiques.

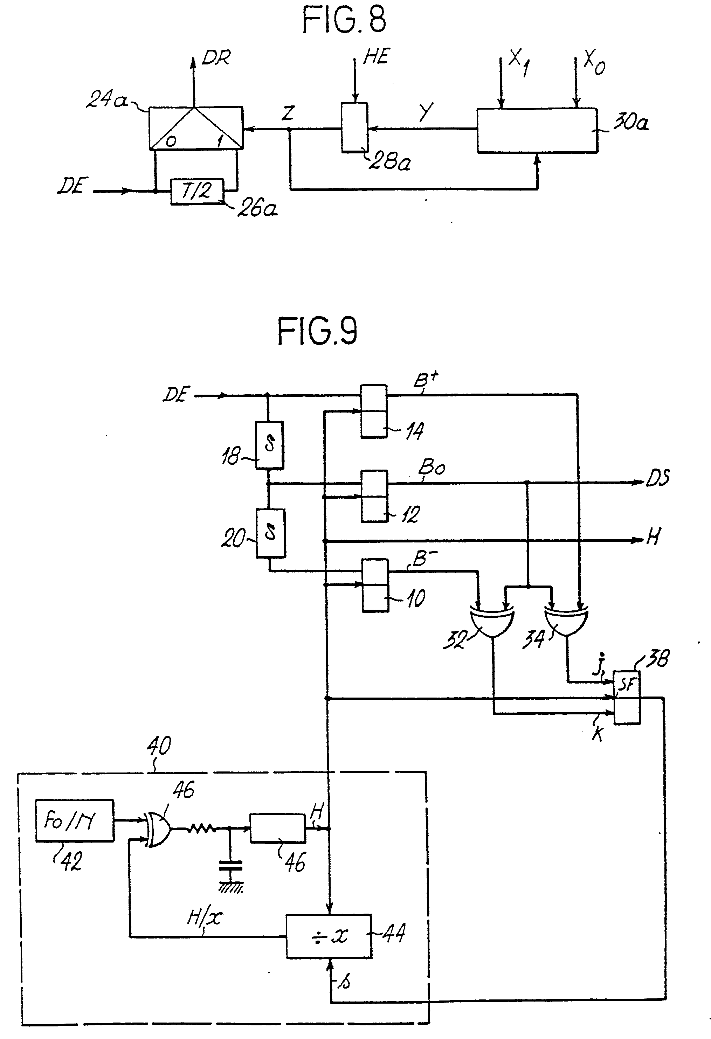

Un second exemple de réalisation, plus simple que le précédent, fait appel à une ligne permettant de réaliser un seul retard (c'est-à-dire pour laquelle $n = 1$). Seule la partie basse du schéma de la Figure 7 se trouve alors modifiée et prend la forme montrée en Figure 8, où les éléments correspondant à ceux de la Figure 7 portent le numéro de référence affecté de l'indice a.

Dans ce cas, on peut prendre $\delta = T/8$, et $k = T/2$.

La table de vérité sera alors :

| y | $\overline{x}_o\ \overline{x}_1$ | $\overline{x}_o\ x_1$ | $x_o\ x_1$ | $x_o\ \overline{x}_1$ |
|---|------|------|------|------|
| $\bar{z}$ | 0 | 1 | | 1 |
| z | 1 | 0 | | 0 |

avec $y = x_0 \bar{z} + x_1 \bar{z} + \bar{x}_0 \bar{x}_1 z$

Les solutions qui ont été décrites jusqu'ici permettent d'assurer une relation de phase correcte entre le signal de données et le signal d'horloge d'échantillonnage, dans la mesure où la gigue de phase reste dans les limites prévues. Par contre, elle n'est pas prévue pour compenser un défaut de synchronisme de l'horloge et des données.

Un second mode de réalisation de l'invention doit être mis en œuvre lorsque la condition de synchronisme entre horloge et données n'existe pas. L'alignement en fréquence peut alors se faire par asservissement sur les transitions de données. Une solution simple consiste à utiliser un générateur pouvant fonctionner entre deux fréquences f1 et f2 dont l'une est à coup sûr inférieure et l'autre à coup sûr supérieure à la fréquence de réception du signal de données DE. Le sens de la dérive est inversé par commutation d'un rythme d'horloge sur l'autre lorsque le déphasage entre le signal de données et le signal d'horloge d'échantillonnage dépasse un seuil déterminé.

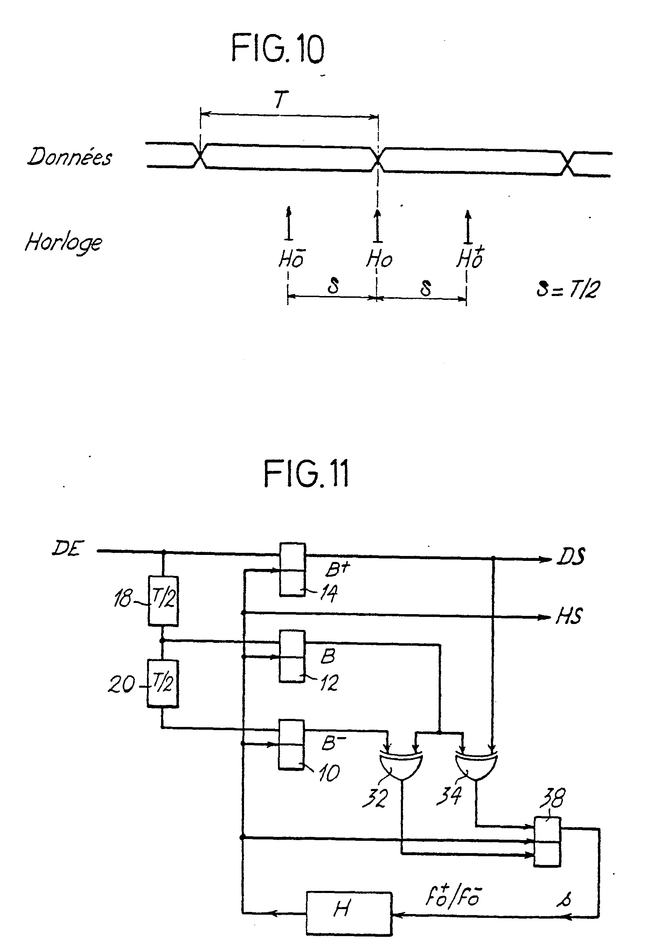

Cette solution est celle adoptée dans le mécanisme montré en Figure 9 dont le générateur de fréquence a une constitution voisine de celle utilisée dans les synthétiseurs de fréquences et basée sur l'utilisation d'une boucle à verrouillage de phase. Le dispositif de localisation de transition du mécanisme de la Figure 9 a de son côté une constitution similaire à celle du dispositif de la Figure 7 et les éléments correspondants des deux Figures sont désignés par le même numéro de référence. La logique d'analyse et de décision se limite à une bascule JK 38 qui reçoit, sur son entrée d'horloge, le signal de sortie du générateur de fréquences 40 et, sur ses entrées de données, la sortie des portes OU EXCLUSIF 32 et 34.

Le générateur de fréquence 40 comporte une horloge 42 qui fournit une fréquence fixe $f_0/N$ telle que les fréquences $f_0(N-1)/N$ et $(N+1)f_0/N$ soient respectivement inférieure et supérieure à la fréquence d'arrivée des données d'entrée DE. La bascule 38 commande le rapport de division de la boucle du générateur de fréquence 40. Pour cela, elle attaque un diviseur programmable 44 dont le rapport de divsion est $N-1$ lorsque le signal reçu de la bascule 38 est 0, $N+1$ quand le signal reçu est au niveau logique 1.

La boucle dans laquelle est placé le diviseur 44 comprend une porte OU EXCLUSIF 46, utilisée comme comparateur de phase, qui reçoit, sur une entrée, le signal de sortie de l'horloge 42, sur l'autre, le signal de sortie du diviseur. La porte OU EXCLUSIF 46 attaque, par l'intermédiaire d'un filtre RC, l'entrée de calage de fréquence d'un oscillateur 46 qui fournit le signal d'horloge H au dispositif de localisation et au diviseur 44. On voit que la bascule 38 détermine à tout instant laquelle des fréquences est la mieux adaptée et sélectionne le rapport de division approprié de la boucle à verrouillage de phase. La sélection s'effectue conformément au tableau suivant :

| Zone d'échantillonnage | I | II· | III |
|---|---|---|---|
| action sur sélection de fréquence | basculement vers $\underline{N-1}$ $f_0$ $N$ | conservation état actuel | basculement vers $\underline{N-1}$ $f_0$ $N$ |

Les valeurs de $\delta$ (qui fixe la garde de détection des cadrages de signal) et de $N$ (qui détermine la finesse de l'encadrement de la fréquence de réception des données par les valeurs que peut prendre la fréquence d'horloge locale) seront choisies en fonction des caractéristiques du signal. En particulier, le choix doit tenir compte de ce qu'une dérive continue se produit si la fréquence du signal de donnée reste stable pendant une longue période et peut conduire à une erreur d'échantillonnage.

Il est bien évident que le système oscillateur de la Figure 9 est donné ici à titre d'illustration. Il peut, en fonction de l'application, être remplacé par tout type de mécanisme capable de passer continuement d'une fréquence inférieure à celle des données incidentes à une fréquence supérieure à celles-ci et vice-versa.

Sur la base du principe général de détection de transitions, il est possible de mettre en œuvre un mécanisme qui s'écarte quelque peu de celui décrit jusqu'ici. Au lieu de s'attacher à cadrer une horloge en dehors de la zone de transition des données par utilisation de deux butées qui détectaient les dérives amont et aval, on peut — comme on le verra maintenant — retenir un mécanisme qui cherche constamment à cadrer l'horloge de référence au plus près de la transition de données. On sera alors assuré que le signal d'horloge en opposition de phase par rapport à celui de référence permettra un échantillonnage correct des données (Figure 10). Exprimé dans le formalisme précédent, on sera sûr d'avoir, sur une transition de données, les bascules $B^-$ et $B^+$ dans un état différent. On connait donc trois états :

| Etat | $B^- = B \neq B^+$ | $B^- = B = B^+$ | $B^- \neq B = B^+$ |
|---|---|---|---|
| Condition | détection de transition de type I | pas de transition de données | détection de transition de type II |

Retarder DE                      Avancer DE

On présente, sur la Figure 11, le schéma d'ensemble associé à cette version dans le cadre d'une réception plésiochrone. Ce schéma diffère très peu de celui de la Figure 9. La différence porte sur la bascule de fourniture 9. La différence porte sur la bascule de fourniture de la donnée valide qui est ici $B^+$ ou $B^-$ et sur la commande de la sélection d'horloge qui est inverse de celle considérée précédemment.

| S | fréquence sélectionnée |
|---|---|
| 0 | $\dfrac{N}{N+1} f_0$ |
| 1 | $\dfrac{N}{N-1} f_0$ |

## Revendications

1. Dispositif de localisation des transitions d'un signal de données transmises sous forme numérique par rapport aux fronts successifs d'un signal d'horloge synchrone ou plésiochrone du signal de données, comportant au moins trois bascules (10, 12, 14) dont chacune a une entrée de validation qui reçoit le signal de données avec un décalage temporel, par rapport à l'horloge, déterminé par des moyens de retard pour chaque bascule, caractérisé en ce qu'il comporte également des moyens logiques (22, 30, 32, 34) reliés à la sortie des bascules qui reçoivent le signal avec des décalages temporels différents et conçus pour engendrer, en fonction d'un critère prédéterminé, un signal de commande d'une boucle d'asservissement représentatif de la relation de phase entre le signal d'horloge et le signal de données.

2. Dispositif selon la revendication 1, caractérisé en ce que les décalages temporels sont réalisés en prélevant le signal de données à plusieurs emplacements successifs de moyens de retard (18, 20).

3. Dispositif selon la revendication 1, caractérisé en ce que les décalages temporels sont réalisés sur le signal d'horloge.

4. Mécanisme de recadrage de signal d'horloge, caractérisé en ce qu'il comprend un dispositif selon la revendication 1 ou 2, dont les moyens de retard (10, 12, 14) sont prévus pour que la somme des décalages temporels réalisés soit inférieure ou égale à une période de l'horloge, le signal de commande représentatif de la relation de phase étant :

dans un premier état, indiquant un cadrage correct, lorsque l'ensemble des bascules délivre un signal identique,

ou dans un second état indiquant une absence d'identité entre les signaux logiques de sortie des première et seconde bascules, significatif d'un décadrage horloge-données dans un premier sens,

ou dans un troisième état indiquant une absence d'identité entre les signaux logiques de sortie des seconde et troisième bascules, significatif d'un décadrage horloge-données dans l'autre sens.

5. Mécanisme selon la revendication 4, caractérisé en ce que la donnée valide est prélevée en sortie de la bascule médiane, des moyens étant prévus pour agir sur la relation de phase entre l'horloge et les données lorsque le signal de commande est dans le second ou le troisième état, de telle sorte que la bascule délivrant un signal différent du signal délivré par les deux autres, délivre à nouveau un signal identique.

6. Mécanisme selon la revendication 5, caractérisé en ce que les moyens pour modifier la relation de phase sont inactifs lorsque le signal de commande est dans le premier état.

7. Mécanisme selon la revendication 4, caractérisé en ce que la donnée valide est prélevée à la sortie de l'une quelconque des bascules latérales (10, 12, 14), des moyens étant prévus pour agir sur la relation de phase entre l'horloge et les données lorsque le signal de commande est dans le second ou le troisième état, de telle sorte que ce signal évolue du second vers le troisième état ou inversement.

8. Mécanisme selon la revendication 5 à 7, caractérisé en ce que le signal d'horloge étant synchrone du signal de données, mais ayant avec le signal de données une relation de phase indéterminées, les moyens pour agir sur la relation de phase sont constitués par un circuit à retard ajustable (24, 26) commandé par ledit signal de commande.

9. Mécanisme selon la revendication 8, caractérisé en ce que le circuit à retard (24, 26) est disposé sur la liaison d'amenée du signal de données auxdits moyens de retard (18, 20).

10. Mécanisme selon la revendication 9, caractérisé en ce que le circuit à retard comporte une ligne à retard à plusieurs prises reliées aux entrées d'un multiplexeur piloté par le signal de commande.

11. Mécanisme selon la revendication 5, 6 ou 7, caractérisé en ce que le signal d'horloge est plésiochrone avec le signal de données et est fourni par un générateur (40) à fréquence variable entre deux valeurs prédéterminées ($f_0(N-1)/N$ et $f_0(N+1)/N$) encadrant la fréquence du signal de données, et en ce que, pour agir sur la relation de phase, le générateur est commandé par le signal de commande.

12. Mécanisme selon la revendication 11, caractérisé en ce que le générateur (40) est constitué par un synthétiseur de fréquences ayant une horloge (42) à fréquence fixe ($f_0/N$) et une boucle à verrouillage de phase ayant un diviseur programmable (44) piloté par le signal de commande.

13. Mécanisme selon l'une quelconque des revendications 5 à 12, caractérisé en ce que les moyens logiques (22) comportent des portes OU-EXCLUSIF (32, 34) associées chacune à un couple de bascules (10, 12, 14) et des moyens d'analyse des signaux de sortie de ces portes OU-EXCLUSIF pour délivrer le signal de commande.

14. Mécanisme selon la revendication 12, caractérisé en ce que les moyens logiques (22) comportent des portes OU-EXCLUSIF (32, 34) associées chacune à un couple de bascules (10, 12, 14) dont les sorties attaquent les entrées de données d'une bascule supplémentaire (38) dont l'entrée d'horloge reçoit le signal d'horloge, ladite bascule supplémentaire étant reliée à l'entrée de commande du diviseur (44) pour sélectionner le rapport de division de ce dernier entre deux valeurs.

## Claims

1. A device for locating the transitions of a data signal transmitted in numerical form with respect to the successive leading edges of a clock signal synchronous or plesiochronous with the data signal, comprising at least three flip-flops (10, 12, 14) each of which has an enabling input which receives the data signal with a time lag with respect to the clock determined by delay means for each flip-flop, characterized in that it also comprises logic means (22, 30, 32, 34) connected to the output of the flip-flops which receive the signal with different time lags and designed to generate, as a function of a predetermined criterion, a control signal for a control loop representing the phase relationship between the clock signal and the data signal.

2. A device as claimed in claim 1, characterized in that the time lags are provided by sampling the data signal at several successive locations of delay means (18, 20).

3. A device as claimed in claim 1, characterized in that the time lags are carried out on the clock signal.

4. Mechanism for resynchronizing a clock signal, characterized in that it comprises a device as claimed in claims 1 or 2, wherein delay means (10, 12, 14) are provided so that the sum of the time lags provided is lower than or equal to a clock period, the control signal representative of the phase relationship being :

in a first state, showing a correct synchronization, when all the flip-flops supply an identical signal,

or in a second state, showing an absence of identity between the logic signals output from the first and second flip-flops, signifying a lack of clock-data synchronization in a first direction,

or in a third state, showing an absence of identity between the logic signals output from the second and third flip-flops, signifying a lack of clock-data synchronization in the other direction.

5. Mechanism as claimed in claim 4, characterized in that the valid datum is sampled as output from the central flip-flop, means being provided to act on the phase relationship between the clock and the data when the control signal is in the second or third state, such that the flip-flop supplying a signal differing from the signal supplied by the two others, again supplies an identical signal.

6. Mechanism as claimed in claim 5, characterized in that the means for modifying the phase relationship are inactive when the control signal is in the first state.

7. Mechanism as claimed in claim 4, characterized in that the valid datum is sampled as output from any one of the lateral flip-flops (10, 12, 14), means being provided to act on the phase relationship between the clock and the data when the control signal is in the second or third state, such that this signal evolves from the second to the third state or vice versa.

8. Mechanism as claimed in claims 5 to 7, characterized in that since the clock signal is synchronous with the data signal but has an undetermined phase relationship with the data signal, the means for acting on the phase relationship are formed by a variable delay circuit (24, 26) controlled by the said control signal.

9. Mechanism as claimed in claim 8, characterized in that the delay circuit (24, 26) is disposed on the connection supplying the data signal to the delay means (18, 20).

10. Mechanism as claimed in claim 9, characterized in that the delay circuit comprises a delay line with several take-offs connected to the inputs of a multiplexer driven by the control signal.

11. Mechanism as claimed in claims 5, 6 or 7, characterized in that the clock signal is plesiochronous with the data signal and is supplied by a generator (40) of frequency which can be varied between two predetermined values $(f_0(N-1)/N$ and $f_0(N+1)/N)$ synchronizing the frequency of the data signal and in that, in order to act on the phase relationship, the generator is controlled by the control signal.

12. Mechanism as claimed in claim 11, characterized in that the generator (40) is formed by a frequency synthesizer having a clock (42) with a fixed frequency $(f_0/N)$ and a phase locking loop having a programmable divider (44) driven by the control signal.

13. Mechanism as claimed in any one of claims 5 to 12, characterized in that the logic means (22) comprise EXCLUSIVE-OR gates (32, 34) each associated with a pair of flip-flops (10, 12, 14) and means for analysing the output signals from these EXCLUSIVE-OR gates in order to supply the control signal.

14. Mechanism as claimed in claim 12, characterized in that the logic means (22) comprise EXCLUSIVE-OR gates (32, 34) each associated with a pair of flip-flops (10, 12, 14) whose outputs actuate the data inputs of an additional flip-flop (38) whose clock input receives the clock signal, this additional flip-flop being connected to the control input of the divider (44) for selecting the division ratio of the latter between two values.

**Patentansprüche**

1. Anordnung zur Lokalisierung der Übergänge eines in digitaler Form übertragenen Datensignals relativ zu den aufeinanderfolgenden Vorderflanken eines zu dem Datensignal synchronen oder plesiochronen Taktsignals, mit wenigstens drei Kippgliedern (10, 12, 14), die jeweils einen Bewertungseingang besitzen, der das Datensignal mit einer Zeitverschiebung gegenüber dem Taktsignal aufnimmt, die durch Verzögerungsmittel für jedes Kippglied bestimmt wird, dadurch gekennzeichnet, daß die Anordnung ferner Logikschaltmittel (22, 30, 32, 34) aufweist, die mit dem Ausgang der Kippglieder verbunden sind und das Signal mit unterschiedlichen Zeitverschiebungen aufnehmen und die so ausgebildet sind, daß sie in Abhängigkeit von einem vorbestimmten Kriterium ein Steuersignal zur Steuerung einer Regelschleife erzeugen, das für die Phasenbeziehung zwischen dem Taktsignal und dem Datensignal kennzeichnend ist.

2. Anordnung nach Anspruch 1, dadurch gekennzeichnet, daß die Zeitverschiebungen dadurch erzeugt werden, daß das Datensignal an verschiedenen aufeinanderfolgenden Stellen der Verzögerungsmittel (18, 20) abgegriffen wird.

3. Anordnung nach Anspruch 1, dadurch gekennzeichnet, daß die Zeitverschiebungen an dem Taktsignal vorgenommen werden.

4. Vorrichtung zur Neusynchronisierung eines Taktsignals, gekennzeichnet durch eine Anordnung nach Anspruch 1 oder 2, deren Verzögerungsmittel (10, 12, 14) so ausgebildet sind, daß die Summe der erzeugten Zeitverschiebungen kleiner oder gleich einer Periode des Taktsignals ist, wobei das die Phasenbeziehung kennzeichnende Steuersignal sich entweder

in einem ersten Zustand befindet, der korrekte Synchronisierung anzeigt, wenn die Gesamtheit der Kippglieder ein identisches Signal liefert,

oder in einem zweiten Zustand, der fehlende Identität zwischen den logischen Ausgangssignalen des ersten und des zweiten Kippglieds anzeigt und für eine Synchronisierungsabweichung zwischen Takt und Daten in einer ersten Richtung kennzeichnend ist,

oder in einem dritten Zustand, der fehlende Identität zwischen den logischen Ausgangssignalen des zweiten und des dritten Kippglieds anzeigt und für eine Synchronisierungsabweichung zwischen Takt und Daten in der anderen Richtung kennzeichnend ist.

5. Vorrichtung nach Anspruch 4, dadurch gekennzeichnet, daß die gültigen Daten am Ausgang des mittleren Kippglieds entnommen werden und daß Mittel vorgesehen sind, die dann, wenn das Steuersignal den zweiten oder dritten Zustand hat, derart auf die Phasenbeziehung zwischen dem Takt und den Daten einwirken, daß dasjenige Kippglied, das ein Signal liefert, das von dem von den beiden anderen Kippgliedern gelieferten Signal abweicht, von neuem ein identisches Signal liefert.

6. Vorrichtung nach Anspruch 5, dadurch gekennzeichnet, daß die Mittel zur Änderung der Phasenbeziehung inaktiv sind, wenn das Steuersignal den ersten Zustand hat.

7. Vorrichtung nach Anspruch 4, dadurch gekennzeichnet, daß die gültigen Daten am Ausgang eines beliebigen der seitlichen Kippglieder (10, 12, 14) entnommen werden und daß Mittel vorgesehen sind, die dann, wenn das Steuersignal den zweiten oder dritten Zustand hat, derart auf die Phasenbeziehung zwischen dem Takt und den Daten einwirken, daß dieses Steuersignal vom zweiten in den dritten Zustand wechselt oder umgekehrt.

8. Vorrichtung nach Anspruch 5 bis 7, dadurch gekennzeichnet, daß das Taktsignal mit dem Datensignal synchron ist, zu ihm jedoch eine unbestimmte Phasenbeziehung hat, und daß die Mittel zur Einwirkung auf die Phasenbeziehung aus einer einstellbaren Verzögerungsschaltung (24, 26) bestehen, die von dem Steuersignal gesteuert wird.

9. Vorrichtung nach Anspruch 8, dadurch gekennzeichnet, daß die Verzögerungsschaltung (14, 16) in der Verbindung zur Zuführung des Datensignals zu den Verzögerungsmitteln (18, 20) angeordnet ist.

10. Vorrichtung nach Anspruch 9, dadurch gekennzeichnet, daß die Verzögerungsschaltung eine Verzögerungsleitung mit mehreren Abgriffen umfaßt, die mit den Eingängen eines von dem Steuersignal gesteuerten Multiplexers verbunden sind.

11. Vorrichtung nach Anspruch 5, 6 oder 7, dadurch gekennzeichnet, daß das Taktsignal zu dem Datensignal plesiochrin ist und von einem Generator (40) geliefert wird, dessen Frequenz zwischen zwei vorbestimmten Werten ($f_0$(N — 1)/N und ($f_0$(N — 1)/N) veränderbar ist, die zu beiden Seiten der Frequenz des Datensignals liegen, und daß der Generator zur Einwirkung auf die Phasenbeziehung von dem Steuersignal gesteuert wird.

12. Vorrichtung nach Anspruch 11, dadurch gekennzeichnet, daß der Generator (40) aus einem Frequenzsynthetisierer besteht, der einen Takterzeuger (22) mit fester Frequenz ($f_0$/N) und eine Phasenverriegleungsschleife mit einem von dem Steuersignal gesteuerten programmierbaren Teiler (44) umfaßt.

13. Vorrichtung nach einem der Ansprüche 5 bis 12, dadurch gekennzeichnet, daß die Logikschaltmittel (22) zur Lieferung des Steuersignals EXKLUSIV-ODER-Glieder (32, 34) aufweisen, die jeweils einem Paar von Kippgliedern (10, 12, 14) zugeordnet sind, sowie Mittel zum Analysieren der Ausgangssignale dieser EXKLUSIV-ODER-Glieder.

14. Vorrichtung nach Anspruch 12 dadurch gekennzeichnet, daß die Logikschaltmittel (22) zur Lieferung des Steuersignals EXKLUSIV-ODER-Glieder (32, 34) aufweisen, die jeweils einem Paar von Kippgliedern (10, 12, 14) zugeordnet sind, deren Ausgänge die Dateneingänge eines weiteren Kippglieds (38) beaufschlagen, dessen Takteingang das Taktsignal aufnimmt, wobei dieses weitere Kippglied mit dem Steuereingang des Teilers (44) verbunden ist, um das Teilerverhältnis des letzteren aus zwei Werten auszuwählen.

FIG.1

20

18

$D_0$

$D_1$

$D_2$

10

12

14

32

34

H

30

FIG.2

$D_0$

T

2υ

$H_0$

$H_v$

FIG.3

$D_0$

$H_0^-$

$H_0$

$H_0^+$

δ | δ

FIG.4

$D_0$

$D_1$

$D_2$

δ | δ

H

1

EP 0 174 880 B1

FIG.5

FIG.6

FIG.7

Données

Cadrage correct

Décadrage aval

Décadrage amont

2

# FIG. 8

# FIG. 9

3

# FIG. 10

Données

Horloge

$T$

$H_{\bar{o}}$    $H_o$    $H_{\bar{o}}^{+}$

$\delta$    $\delta$

$\delta = T/2$

# FIG. 11

DE    DS

$B^{+}$
14

18 — T/2    HS

B
12

20 — T/2

$B^{-}$
10

32    34    38

$f_{\bar{o}}^{+}/f_{\bar{o}}^{-}$    $\delta$

H